# EUROPEAN PATENT APPLICATION

(11) **EP 1 798 941 A1**
(43) Date of publication of application: **20.06.2007**
(21) Application number: 06124827.4
(22) Date of filing: 27.11.2006
(51) Int. Cl.: H04M 1/02

(54) **Hinge device and mobile apparatus having the same**

(30) Priority: 24.04.2006 KR 20060036748; 19.12.2005 KR 20050125570
(71) Applicant: Samsung Electronics Co., Ltd., Suwon-si, Gyeonggi-Do (KR)
(72) Inventor: Kim, Jin-wook, Gimcheon-si, Gyeongsangbuk-do (KR)
(74) Representative: Grünecker, Kinkeldey, Stockmair & Schwanhäusser Anwaltssozietät

(57) **Abstract**

A mobile device (101) has a first object (103), a second object (102), and a hinge (100) device to slide open and close the second object with respect to the first object, and the hinge device has a sliding unit slidable with respect to a first object, and a rotary unit rotatable with respect to the sliding unit, and engaged with a second object. Accordingly, the hinge device requires a relatively smaller space to be installed in the mobile apparatus so that the mobile apparatus can be compacter. Furthermore, there is no installation line of the hinge device so that the mobile apparatus can be refinedly designed.

## Description

### BACKGROUND OF THE INVENTION

### Field of the Invention

The present invention relates to a mobile apparatus. More particularly, the present invention relates to a new hinge device that requires a reduced space to be installed and has a simplified structure, and a mobile apparatus having the same.

### Description of the Related Art

A mobile apparatus such as a mobile phone and a camcorder has a display part that can rotate from a main body. Accordingly, a user opens the display part of the mobile apparatus and distances the display part from the main body by a predetermined distance to adjust a rotating angle of the display part. To this end, the display part of the mobile apparatus is hinged to the main body.

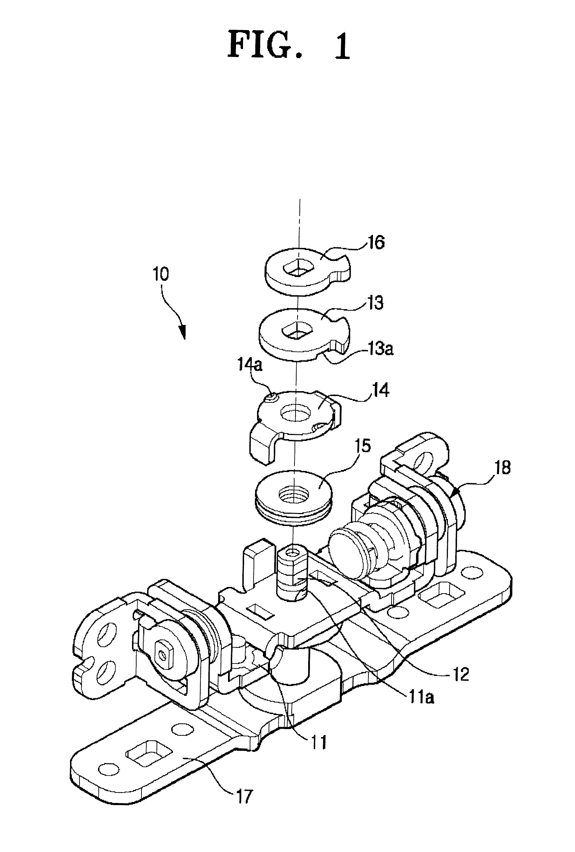

FIG 1 illustrates an example of a conventional rotatable hinge device. Referring to FIG 1, a conventional rotatable hinge device 10 comprises a main bracket 11 having a hinge unit 18, a shaft 12 rotatably engaged with a penetrating opening 11a of the main bracket 11, a pair of cams 13 and 14 fitting over the shaft 12 to restrain a rotating of the main bracket 11, and an elastic member 15 disposed between the pair of cams 13 and 14 and the penetrating opening 11a to press the main bracket 11. Above the cam 13, a detector 16 may be further formed to operate a rotating angle sensing switch (not shown). Under the shaft 12, a fixing member 17 is fixed, and the elastic member 15 may include a spring washer. The pair of cams 13 and 14 comprise a lower cam 14 having a protrusion 14a to form a standard click sense when rotating, and an upper cam 13 having a recess 13a to receive the protrusion 14a. Accordingly, when the rotatable hinge device 10 is rotating, the lower cam 14 and the upper cam 13 come into friction with each other to implement a free stop movement and a click sense through the protrusion 14a of the lower cam 14 and the recess 13a of the upper cam 13. The free stop movement refers to an arbitrarily adjustment of a rotating angle as desired, and hereafter it will call a free stop.

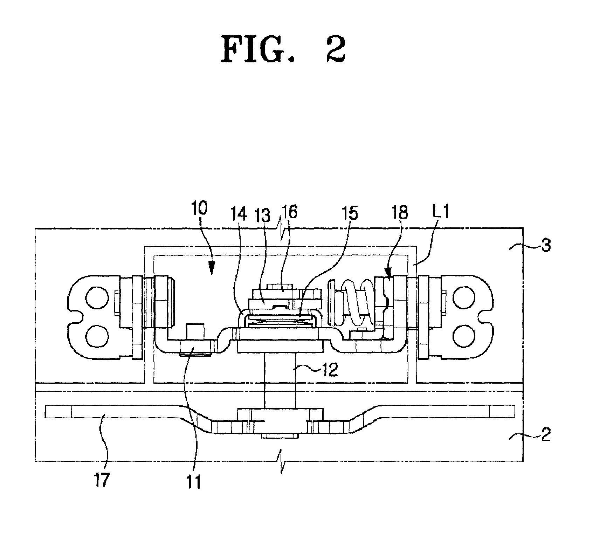

FIG 2 is a front view of the rotatable hinge device when the rotatable hinge device is engaged with a mobile apparatus. As shown in FIG 2, the rotatable hinge device 10 having the fixing member 17 of the shaft 12 engaged with the display part 2 is connected to the main body 3 of the mobile apparatus by a hinge unit 18 of the main bracket 11.

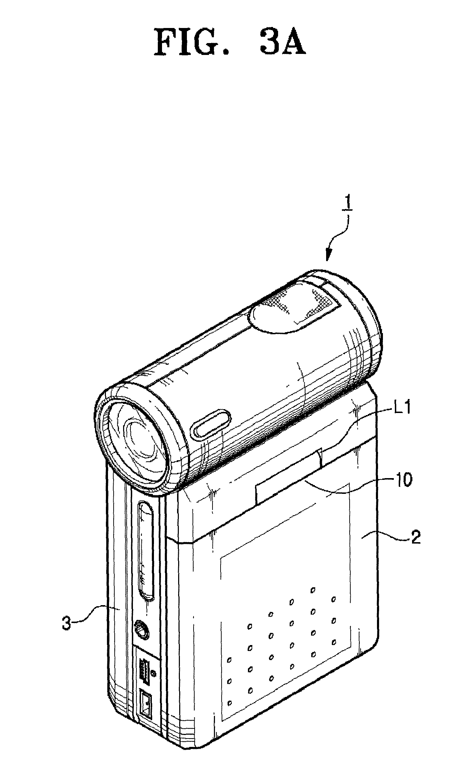

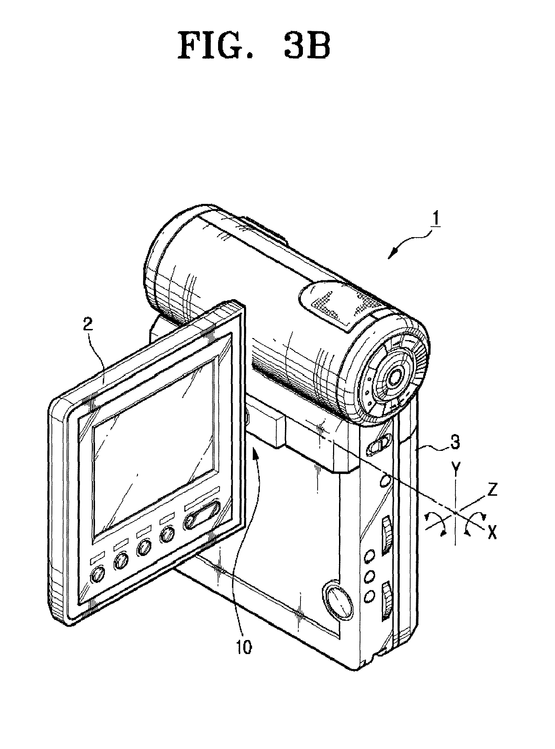

FIG 3 is a view illustrating an example of an upright camcorder 1 having the rotatable hinge device: FIG 3A shows when the display part 2 closes; and FIG 3B shows when the display part 2 opens.

Referring to FIGS. 3A and 3B, the upright camcorder 1 has the display part 2 that can be rotated based on X axis of FIG. 3B by the rotatable hinge device 10 so that the display part 2 can be opened from the main body 3. While opened, the display part 2 can be rotated based on Z axis of X-Y plane of FIG 3B, that is, from the main body 3, by the shaft 12. Accordingly, a user rotates the display part 2 to adjust an angle of a screen when the display part 2 is distanced from the main body 3. The upright camcorder 1 observes a subject using the display part 2 such as a liquid crystal display (LCD) instead of a general viewfinder.

However, the conventional rotatable hinge device 10 has a relatively large-sized part such as the main bracket so that it occupies a large space in the mobile apparatus and requires a large space to be engaged. Especially, a small-sized mobile apparatus such as the upright camcorder 1 using a hard drive or a flash memory requires compacter hinge device, in comparison with a mobile apparatus having a deck unit using a magnetic recording medium. Additionally, a part of the conventional hinge device is exposed to the outside by an installation line L1 generated when installed with the mobile apparatus, which interferes with a refined designing.

### SUMMARY OF THE INVENTION

The present invention has been conceived to solve the above-mentioned problems occurring in the prior art, and an aspect of the present invention is to provide an improved hinge device that can be installed even in a small area of a mobile apparatus in comparison with the conventional rotatable hinge device.

Another aspect of the present invention is to provide a hinge device, no installation line of which shows when installed with a mobile apparatus so that a mobile apparatus can be more refinedly designed.

Yet another aspect of the present invention is to provide a mobile apparatus having the hinge device.

Accordingly, the present invention provides a hinge device comprising a sliding unit slidable with respect to a first object; and a rotary unit rotatable with respect to the sliding unit, and engaged with a second object.

The sliding unit may comprise a sliding body; and a first connection portion to engage the sliding body with the first object.

The sliding body may be curved with a certain curvature.

The sliding body may comprise: a first connection opening to receive the first connection portion; and a second connection opening to receive the rotary unit.

The first connection portion may protrude from the sliding body.

The first connection portion may comprise: a first elastic member inserted in the first connection opening; and guide protrusions elastically supported by each opposite end of the first elastic member to protrude to an outside of the sliding body.

The guide protrusions may be slid along a guide recess formed in the first object.

The guide recess may be provided with a locking part, and the sliding body comprises a locking protrusion corresponding to the locking part.

The rotary unit may comprise: a rotary body engaged with the second object; a first rotary shaft formed on the rotary body, and engaged in the second connection opening; a cam formed on the first rotary shaft to control rotation of the rotary body; and a second elastic member formed on the first rotary shaft to elastically bias the cam.

The rotary body may comprise a fixing member to fix the second object. Alternatively, the rotary body may comprise a second connection portion to rotatably engage with the second object.

The second connection portion may comprise: a third elastic member inserted in a shaft hole formed in the rotary body; and a second rotary shaft elastically supported by both ends of the third elastic member, and protruding out of the rotary body.

The cam may comprise: a first cam having a protrusion; and a second cam having a hole corresponding to the protrusion.

The rotary unit may further comprise a detector to detect the angle of rotation of the first rotary shaft.

The sliding body and the rotary body may each comprise a cable hole formed therein.

The present invention also provides a mobile device, comprising: a first object; a second object; and a hinge device to slide open and close the second object with respect to the first object.

The hinge device may allow the second object to slidably open the first object and rotate.

The hinge device may be formed at the inner corner of the second object.

In one exemplary implementation, the first object may be a main body, and the second object may be a display part.

In another exemplary implementation, the first object may be a display part, and the second object may be a main body.

### BRIEF DESCRIPTION OF THE DRAWINGS

The above and other aspects, features and advantages of the present invention will be more apparent from the following detailed description taken with reference to the accompanying drawings, in which:

FIG 1 is a perspective view illustrating a conventional hinge device;

FIG 2 is a front view illustrating the hinge device of FIG 1 when installed in a mobile apparatus;

FIG 3 is a perspective view illustrating an upright camcorder having the hinge device of FIG. 1: FIG 3A shows when a display part closes; and FIG 3B shows when the display part opens;

FIG 4 is a structure view illustrating a hinge device according to a first exemplary embodiment of the present invention: FIG 4A shows a front of the hinge device; and FIG 4B shows a side of the hinge device;

FIG 5 is an exploded perspective view illustrating the hinge device of FIG 4;

FIG 6 is an external view illustrating an upright camcorder having the hinge device of FIG 4;

FIG 7A through 7E are views illustrating operations of an upright camcorder having a hinge device according to a first exemplary embodiment of the present invention;

FIG 8 is an exploded perspective view illustrating a hinge device according to a second exemplary embodiment; and

FIGS. 9A and 9B are views illustrating operations of an upright camcorder having a hinge device according to a second exemplary embodiment of the present invention.

### DETAILED DESCRIPTION OF THE EXEMPLARY EMBODIMENTS

Exemplary embodiments of the present invention will be described in detail with reference to the annexed drawings. In the drawings, the same elements are denoted by the same reference numerals throughout the drawings. In the following description, detailed descriptions of known functions and configurations incorporated herein have been omitted for conciseness and clarity.

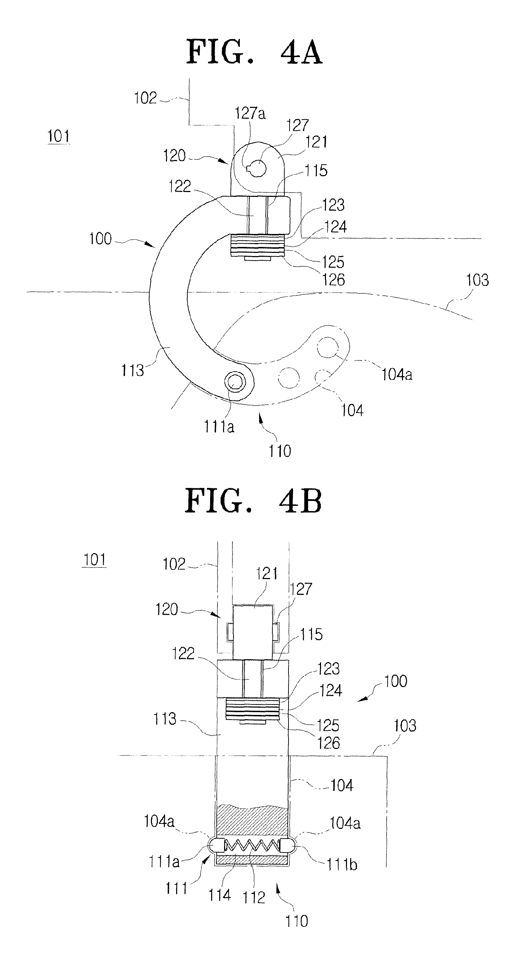

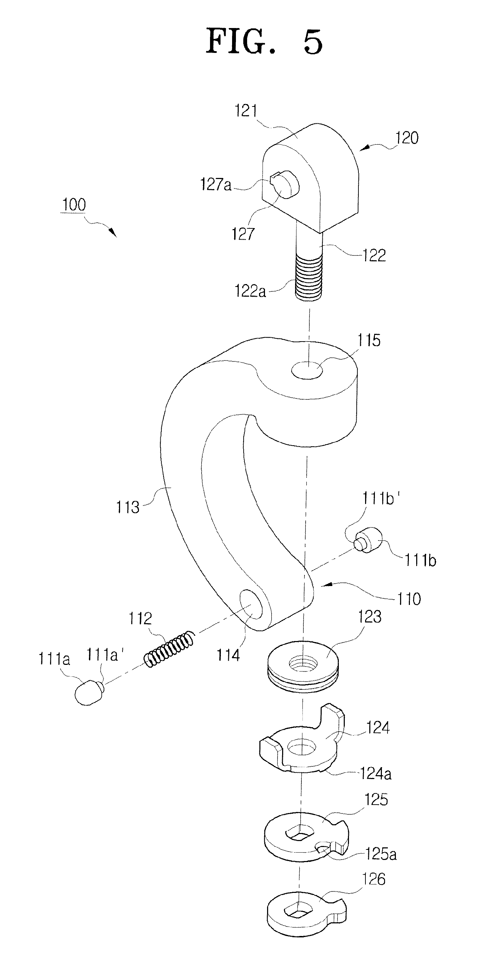

FIG 4 is a structure view illustrating a hinge device according to a first exemplary embodiment of the present invention: FIG. 4A is a front view thereof; and FIG 4B is a rear view thereof FIG. 5 is an exploded perspective view of the hinge device.

Referring to FIGS. 4 and 5, a hinge device 100 according to an exemplary embodiment of the present invention comprises a sliding unit 110 slidable with respect to a first object, and a rotary unit 120 rotatable with respect to the sliding unit 110 and on which a second object is coupled. In this particular example of the invention, the main body 103 and the display part 102 are implemented as the first and the second objects, respectively. However, any adequate alternative examples are possible. For example, the display part 102 may be implemented as the first object, while the main body 103 is implemented as the second object.

The sliding unit 110 comprises a sliding body 113 and a first connection portion 111 to engage the sliding body 113 with the first object, that is, with the main body 103.

The sliding body 113 may be shaped to have a certain curvature, but it should not be construed as limiting. Alternatively, the sliding body 113 may be shaped in a linear fashion. The curvature of the sliding body 113 may appropriately be determined according to the size of specifications of the product. The sliding body 113 may be shaped in a polygonal fashion. For example, the sliding body 113 may be shaped to have a circular horizontal section. The sliding body 113 may have a cable hole 113' formed therein, through which a cable 5 is placed to connect signal between the main body 103 and the display part 102. The cable hole 113' may be formed next to a second connection opening 115 which extends from one end to the other end of the sliding body 113 (see portion 'A' of FIG 5). Portion 'A' of the cable hole 113' may have a substantially oval shape. The sliding body 113 additionally comprises a first connection opening 114 formed on one end for engagement with the first connection portion 111, and the second connection opening 115 formed on the other end for engagement with the rotary unit 120. The second connection opening 115 may be formed in substantially perpendicular relation with the first connection opening 114. Alternatively, the second connection opening 115 may be formed at a predetermined angle with respect to the first connection opening 114.

The first connection portion 111 comprises a first elastic member 112 inserted in the first connection opening 114, and a pair of guide protrusions 111a and 111b. Opposite ends of the first elastic member 112 have a first guide protrusion 111a and a second guide protrusion 111b, respectively. The first and the second guide protrusions 111a and 111b protrude to the outside of the sliding body 113. For example, the first connection opening 114 may be vertically extended in the sliding body 113. In this case, the first and the second guide protrusions 111a and 111b may be protruded from upper and lower sides of the sliding body 113, respectively. Alternatively, the first connection opening 114 may be horizontally extended in the sliding body 113, and in this case, the first and the second guide protrusions 111a and 111b may be protruded from left and right sides of the sliding body 113, respectively. The pair of guide protrusions 111a and 111b may have surfaces in round or hemisphere forms. For example, the pair of guide protrusions 111a and 111b may be round balls or round rods. The pair of guide protrusions 111a and 111b each may have engagement protrusions 111a' and 111b' inward the first connection opening 114 so as to be connected with the first elastic member 112. The first elastic member 112 fits over each engagement protrusion 111a' and 111b' of the pair of guide protrusions 111a and 111b to push the pair of guide protrusions 111a and 111b outward. Therefore, when the pair of guide protrusions 111a and 111b are slid along the guide recess 104 inside of the main body 103, the display part 102 engaged with the sliding body 113 can be arbitrarily stopped at a certain angle. In other words, a free stop can be implemented. The first connection portion 111 may be provided in various changes if the sliding body 113 is guided along the guide recess 104 to perform a free stop movement. A pair of locking parts 104a may be formed on upper and lower ends, or left and right ends, next to the mouth of the guide recess 104, while there are a pair of locking protrusions 113a formed on upper and lower ends, or left and right ends of one end of the sliding body 113, to engage with the locking parts 104a. Accordingly, the sliding body 113 is not easily separated from the guide recess 104.

The rotary unit 120 comprises a rotary body 121, a first rotary axis 122, a second elastic member 123 and a pair of cams 124 and 125.

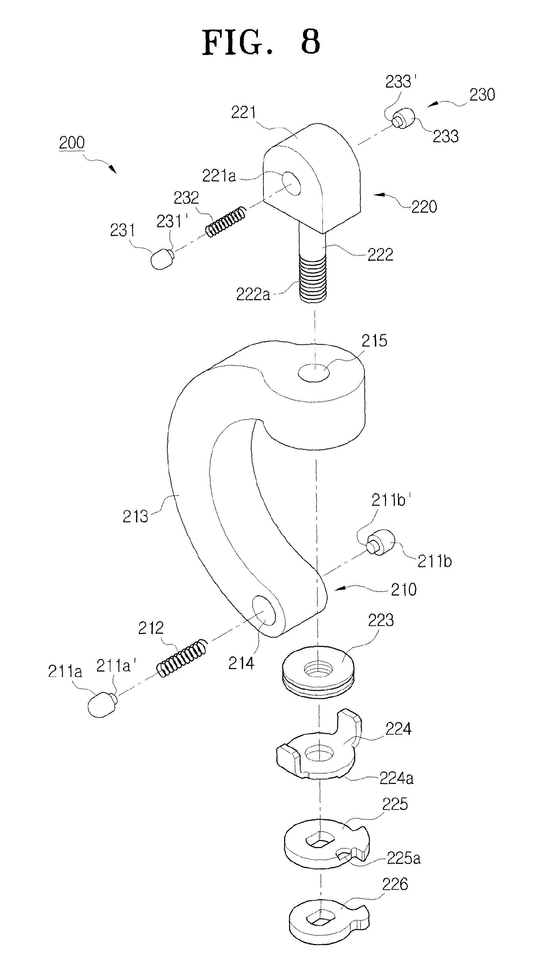

The rotary body 121 is engaged with the second object which is the display part 102 in this embodiment. The hinge device 100 according to the first exemplary embodiment of the present invention has the rotary body 121 that is engaged with the display part 102 by a fixing member 127. However, the hinge device 200 (refer to FIG 8) according to a second exemplary embodiment of the present invention, which will be explained later, has a rotary body 221 that is engaged with a display part 202 by a second connection portion 230. In the hinge device 100 according to the first exemplary embodiment of the present invention, the fixing member 127 is inserted in a fixing recess (not shown) of the display part 102 so as to engage the rotary body 121 with the display part 102. The fixing member 127 may be extended from a center of the rotary body 121 as a single member. Or, a separate axial opening may be formed on a central portion of the rotary body 121 and the fixing member 127 of a bar shape may be inserted in the penetrating opening. Irrespective of the shapes, the fixing member 127 has a fixing protrusion 127a so that the rotary body 121 is not separately rotated from the first rotary axis 122. The rotary body 121 has a cable hole 121' formed therein. The cable hole 121' of the rotary body 121 may preferably be formed above the portion 'A' of the cable hole 113' of the sliding body 113 and in a fluid communication.

The first rotary axis 122 is provided to the rotary body 121, and rotatably engaged with a sliding unit 110, in detail, with the second connection opening 115 of the sliding body 113. A screw thread is formed at one end of the first rotary axis 122, and the second elastic member 123 and the pair of cams 124 and 125 are sequentially engaged with the first rotary axis 122. Although not shown, a separate cap is fastened with the screw thread of one end of the first rotary axis 122 to prevent separations of the second elastic member 123 and the pair of cams 124 and 125. The first rotary axis 122 and the rotary body 121 may be integrally formed. The first rotary axis 122 may further include a detector 126. The detector 126 is disposed above the pair of cams 124 and 125 to operate a rotary angle sensing switch (not shown) of the first rotary axis 122.

The second elastic member 123 fits over the first rotary axis 122 to press the pair of cams 124 and 125. The second elastic member 123 may include a spring washer.

The pair of cams 124 and 125 come in contact with the second elastic member 123 of the first rotary axis 122 to be engaged. The pair of cams 124 and 125 controls a rotating of the rotary body 121. The pair of cams 124 and 125 comprise a first cam 124 having a protrusion 124a, and a second cam 125 having a protrusion receiving recess 125a corresponding to the protrusion 124a. The pair of cams 124 and 125 form a standard click sense when the first rotary axis 122 rotates. Accordingly, when the first rotary axis 122 rotates, the first cam 124 and the second cam 125 come into friction by a repulsive force of the second elastic member 123 so that a free stop rotary movement can be implemented and a click sense can be realized through the protrusion receiving recess 125a of the second cam 125 and the protrusion 124a of the first cam 124.

However, the above configuration of the rotary unit 120 should not be considered as limiting. The configuration of the rotary unit 120 according to the first exemplary embodiment of the present invention may be provided in various changes if the display part 102 can be rotated based on 2 axes.

The mobile apparatus 101 having the hinge device 100 according to the first exemplary embodiment of the present invention comprises the main body 103, the display part 102, which can output image information from the main body 103, and the hinge device 100.

In the main body 103, the guide recess 104 is formed for the hinge device 100 to be slid. The curved guide recess 104 is formed to correspond to a shape of the sliding body 113. Accordingly, the mobile apparatus 101 having the hinge device 100 can open and close the display part 102 along the guide recess 104 from the main body 103. Additionally, the hinge device 100 is engaged by the sliding body 113 and slid along the guide recess 104 so that a space for forming the hinge device 100 can be significantly reduced.

The mobile apparatus 101 according to the first exemplary embodiment of the present invention may have the hinge device 100 on an inner surface of a top end of the display part 102. Because being formed on the inner surface of the display part 102, the hinge device 100 is hidden from the outside of the display part 102.

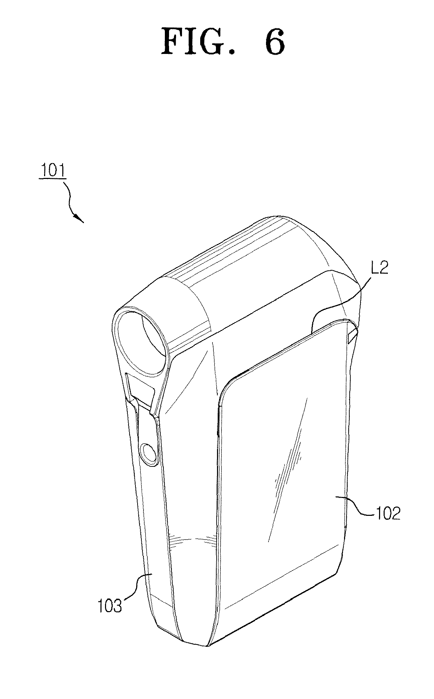

FIG 6 is a view illustrating an exterior of an upright camcorder as an example of a mobile apparatus having a hinge device according to the first exemplary embodiment of the present invention. As shown in FIG 6, the mobile apparatus 101 having the hinge device 100 according to the first exemplary embodiment of the present invention has no line at a portion where the hinge device 100 is installed and at an exterior only line L2 of the top end of the display part 102 so that a refined design can be realized.

The operations of the mobile apparatus having the hinge device according to the first exemplary embodiment of the present invention will be elucidated with reference to accompanying drawings.

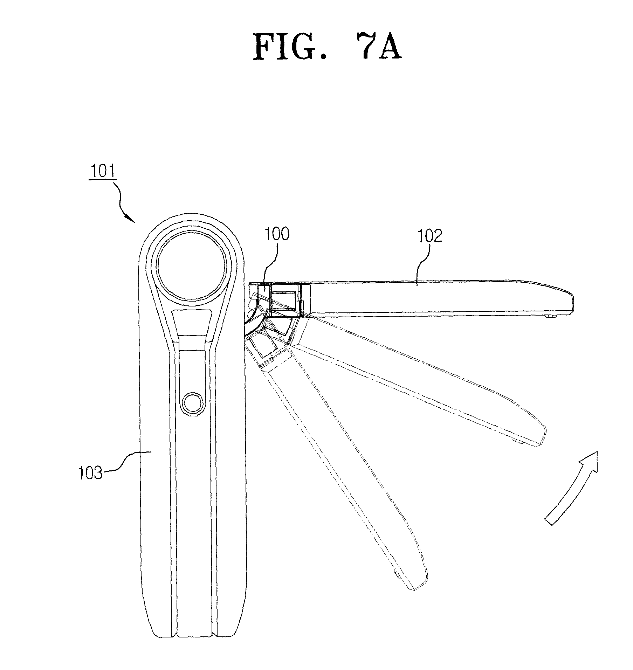

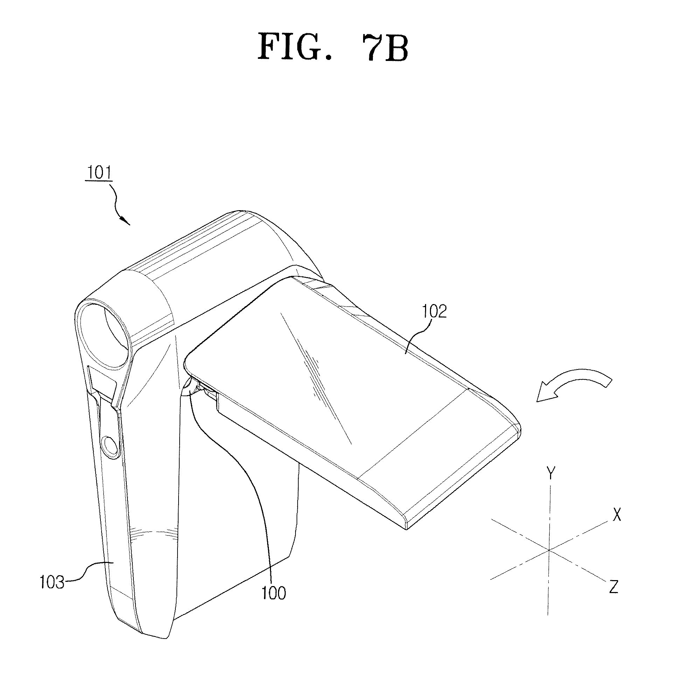

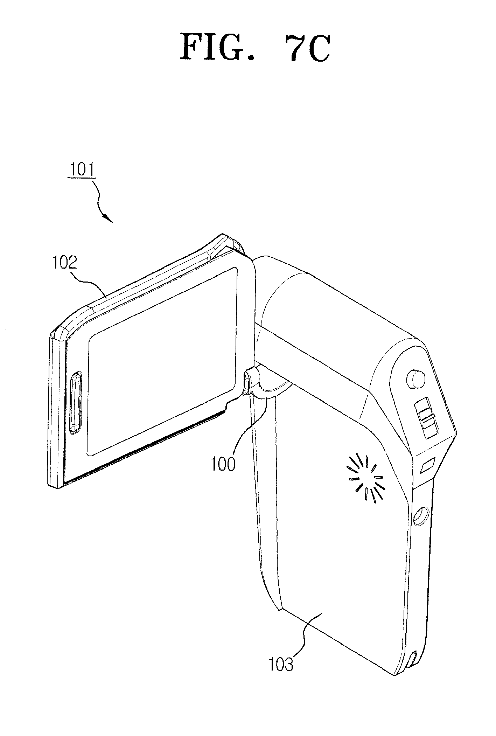

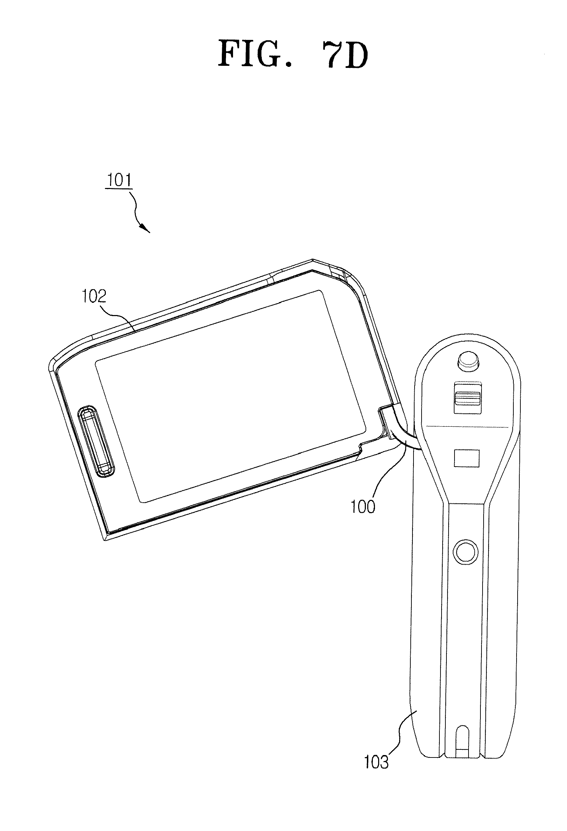

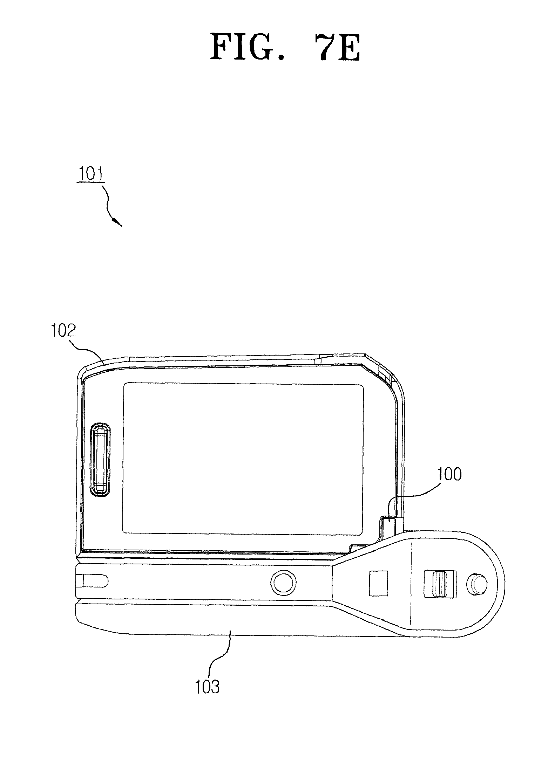

FIGS. 7A through 7E illustrate the operations of an upright camcorder, which is a representative model of a mobile apparatus having the hinge device according to the first exemplary embodiment of the present invention. As shown in FIG 7, the hinge device 100 is engaged with one end of the upper portion of the display part 102 of the upright camcorder 101.

First, as shown in FIGS. 4A and 7A, in the upright camcorder 101 according to the first exemplary embodiment of the present invention, the sliding body 113 of the hinge device 100 is slid along the guide recess 104 of the main body 103 to open and close the display part 102. Especially, as shown in dotted lines of FIG. 7A, the display part 102 can perform a free stop at a certain angle by the first connection portion 111. The locking protrusions 113a of the sliding body 113 are locked in the locking parts 104a of the guide recess 104 so that the sliding body 113 does not slide beyond a predetermined limit of the guide recess 104. Therefore, the sliding body 113 is not separated from the guide recess 104.

Additionally, irrespective of a degree in which the sliding body 113 opens and closes, the display part 102 can be rotated on X-Y plane from the sliding body 113, that is, based on Z axis, by the rotary unit 120 as shown in FIG 7B.

FIG 7C illustrates a moving image photographing mode of the upright camcorder 101 and it is convenient to photograph a moving image while holding the upright camcorder 101 in hands and viewing the display part 102.

Under the moving image photographing mode like FIG. 7C, the sliding body 113 can be slid into the main body 103. FIG 7D illustrates this operation status.

When the sliding body 113 is slid into the main body 103, the upright camcorder 101 comes into a status of FIG 7E. FIG 7E illustrates a still image photographing mode and it is very convenient to photograph a still image or reproduce and view the image. The status of FIG 7E will satisfy a landscape mode for watching digital multimedia broadcasting (DMB).

As described above, the mobile apparatus according to the first exemplary embodiment of the present invention has the display part that can be freely and smoothly operated and provides a convenience of use.

FIG 8 is an exploded perspective view of the hinge device according to the second exemplary embodiment of the present invention.

Referring to FIG 8, the hinge device 200 according to the second exemplary embodiment of the present invention has a structure in which the rotary body 221 of the rotary unit 220 is engaged with the display part 202 by the second connection portion 230 as aforementioned. The second connection portion 230 of the rotary body 221 according to the second exemplary embodiment of the present invention may have the same structure and member as the first connection portion 111 according to the first exemplary embodiment of the present invention.

In detail, the second connection portion 230 comprises the third elastic member 232 and a pair of second rotary axes 231 and 233. The pair of second rotary axes 231 and 233 protrude to the outside of the rotary body 221. Surfaces of the pair of second rotary axes 231 and 233 may be provided in round or hemispheric forms. For example, the pair of second rotary axes 231 and 233 may be round balls or round rods. The pair of second rotary axes 231 and 233 each may have engagement protrusions 231' and 233' inward an axial opening 221a so as to be connected with the third elastic member 232. The third elastic member 232 fits over each engagement protrusion 231' and 233' of the pair of second rotary axes 231 and 233 to push the pair of second rotary axes 231 and 233 outward. Accordingly, the pair of second rotary axes 231 and 233 can allow the display part 102 to arbitrarily stop at a certain angle, that is, a free stop can be implemented. For more effective free stop function, the display part 202 has hemispheric recesses to correspond to the engagement protrusions 231' and 233' of the second rotary axes 231 and 233 of the hinge device 200 according to the second exemplary embodiment of the present invention.

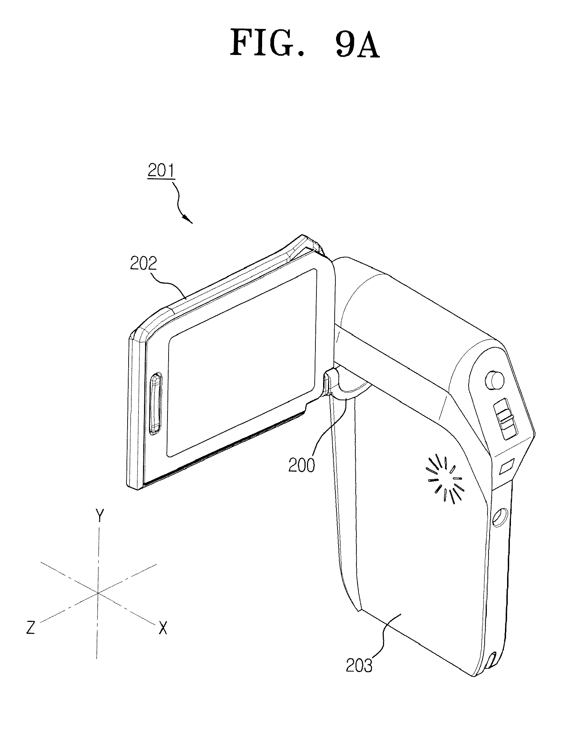

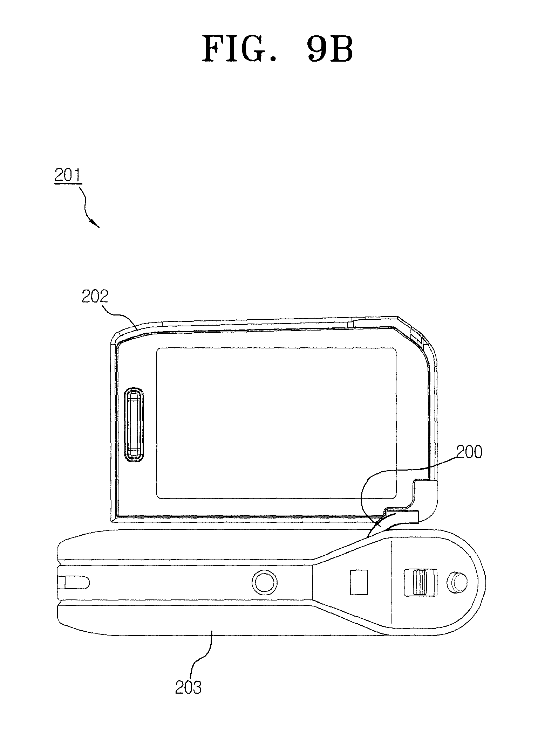

FIGS. 9A and 9B are views illustrating operations of an upright camcorder having the hinge device 200 according to the second exemplary embodiment of the present invention. Referring to FIGS. 9A and 9B, the hinge device 200 according to the second exemplary embodiment of the present invention is engaged with one end of an upper portion of the display part 202 of the upright camcorder 201.

The upright camcorder 201 according to the second exemplary embodiment of the present invention can be rotated also based on X axis by a sliding body 213. Especially, even when the sliding body 213 is not slid into a main body 203, the upright camcorder 201 according to the second exemplary embodiment of the present invention can directly convert a moving image photographing mode of FIG 9A into a landscape mode of FIG 9B by a rotating of the second connection member 230.

The hinge device according to embodiments of the present invention can be installed in a small space of a mobile apparatus in comparison with a conventional rotatable hinge device so that the mobile apparatus can be compacter.

The mobile apparatus having the hinge device according to embodiments of the present invention has no line for engaging the hinge device so that it can be refinedly designed, in comparison with the conventional mobile apparatus.

While the invention has been shown and described with reference to certain embodiments thereof, it will be understood by those skilled in the art that various changes in form and details may be made therein without departing from the spirit and scope of the invention as defined by the appended claims.

## Claims

1. A hinge device comprising:
a sliding unit slidable with respect to a first object; and
a rotary unit rotatable with respect to the sliding unit, and engaged with a second object.

2. The hinge device according to claim 1, wherein the sliding unit comprises:
a sliding body; and
a first connection portion to engage the sliding body with the first object.

3. The hinge device according to claim 2, wherein the sliding body is curved with a certain curvature.

4. The hinge device according to claim 2, wherein the sliding body comprises:
a first connection opening to receive the first connection portion; and
a second connection opening to receive the rotary unit.

5. The hinge device according to claim 2, wherein the first connection portion protrudes from the sliding body.

6. The hinge device according to claim 4, wherein the first connection portion comprises:
a first elastic member inserted in the first connection opening; and
guide protrusions elastically supported by each opposite end of the first elastic member to protrude to an outside of the sliding body.

7. The hinge device according to claim 6, wherein the guide protrusions are slid along a guide recess formed in the first object.

8. The hinge device according to claim 7, wherein the guide recess is provided with a locking part, and the sliding body comprises a locking protrusion corresponding to the locking part.

9. The hinge device according to claim 4, wherein the rotary unit comprises:
a rotary body engaged with the second object;
a first rotary shaft formed on the rotary body, and engaged in the second connection opening;
a cam formed on the first rotary shaft to control rotation of the rotary body; and
a second elastic member formed on the first rotary shaft to elastically bias the cam.

10. The hinge device according to claim 9, wherein the rotary body comprises a fixing member to fix the second object.

11. The hinge device according to claim 9, wherein the rotary body comprises a second connection portion to rotatably engage with the second object.

12. The hinge device according to claim 11, wherein the second connection portion comprises:
a third elastic member inserted in a shaft hole formed in the rotary body; and
a second rotary shaft elastically supported by both ends of the third elastic member, and protruding out of the rotary body.

13. The hinge device according to claim 9, wherein the cam comprises:
a first cam having a protrusion; and
a second cam having a hole corresponding to the protrusion.

14. The hinge device according to claim 9, wherein the rotary unit further comprises a detector to detect the angle of rotation of the first rotary shaft.

15. The hinge device according to claim 9, wherein the sliding body and the rotary body each comprises a cable hole formed therein.

16. The hinge device according to claim 1, wherein the first object comprises a body of a mobile device and the second object comprises a display part.

17. The hinge device according to claim 1, wherein the first object comprises a display part of a mobile device, and the second object comprises a body of the mobile device.

18. A mobile device, comprising:
a first object;
a second object; and
a hinge device to slide open and close the second object with respect to the first object.

19. The mobile device according to claim 18, wherein the hinge device allows the second object to slidably open the first object and rotate.

20. The mobile device according to claim 19, wherein the hinge device comprises:
a sliding unit slidable with respect to the first object; and
a rotary unit rotatable with respect to the sliding unit, and engaged with the second object.

21. The mobile device according to claim 20, wherein the sliding unit comprises:
a sliding body; and
a first connection portion to engage the sliding body with the first object.

22. The mobile device according to claim 21, wherein the sliding body is formed with a predetermined curvature.

23. The mobile device according to claim 21, wherein the sliding body comprises a first connection opening to accommodate the first connection portion, and a second connection opening to accommodate the rotary unit.

24. The mobile device according to claim 21, wherein the first connection portion protrudes from the sliding body.

25. The mobile device according to claim 23, wherein the first connection portion comprises:
a first elastic member inserted in the first connection opening; and
a guide protrusion elastically supported by both ends of the first elastic member, and protruding outside of the sliding body.

26. The mobile device according to claim 25, wherein the guide protrusion is slid along a guide recess formed in the first object.

27. The mobile device according to claim 26, the guiding recess comprises a locking part and the sliding body comprises a locking protrusion corresponding to the locking part.

28. The mobile device according to claim 23, wherein the rotary unit comprises:
a rotary body engaged with the second object;
a first rotary shaft formed on the rotary body, and inserted in the second connection opening;
a cam formed on the first rotary shaft to control the rotation of the rotary body; and
a second elastic member formed on the first rotary shaft to elastically bias the cam.

29. The mobile device according to claim 28, wherein the rotary body comprises a fixing member to fix the second object.

30. The mobile device according to claim 28, wherein the rotary body comprises a second connection portion to rotatably engage the second object.

31. The mobile device according to claim 30, wherein the second connection portion comprises:
a third elastic member inserted in a shaft hole formed in the rotary body; and
a second rotary shaft elastically supported by both ends of the third elastic member, and protruding out of the rotary body.

32. The mobile device according to claim 28, wherein the cam comprises:
a first cam comprising a protrusion; and
a second cam comprising a receiving hole corresponding to the protrusion.

33. The mobile device according to claim 28, wherein the rotary unit further comprises a detector to sense the angle of rotation of the first rotary shaft.

34. The mobile device according to claim 28, wherein each of the sliding body and the rotary body comprises a cable hole formed therein.

35. The mobile device according to claim 18, wherein the hinge device is formed inside the second object.

36. The mobile device according to claim 35, wherein the hinge device is formed at a corner of the second object.

37. The mobile device according to claim 18, wherein the first object is a main body, and the second object is a display part.

38. The mobile device according to claim 18, wherein the first object is a display part, and the second object is a main body.
